# EUROPÄISCHE PATENTSCHRIFT

(11) **EP 1 710 215 B1**
(45) Veröffentlichungstag und Bekanntmachung des Hinweises auf die Patenterteilung: **01.07.2009**
(21) Anmeldenummer: 05007769.2
(22) Anmeldetag: 08.04.2005
(51) Int. Cl.: C04B 22/14, C04B 28/02

(54) **Verfahren zur Herstellung eines hydraulischen Bindemittels**
Process for manufacturing a hydraulic binder.
Procédé de fabrication d'un liant hydraulique.

(43) Veröffentlichungstag der Anmeldung: 11.10.2006
(73) Patentinhaber: Tronox Pigments GmbH, 47829 Krefeld (DE); Kehrmann, Alexander, 46509 Xanten (DE)
(72) Erfinder: Laubach, Benno, 47809 Krefeld (DE); Auer, Gerhard, 47800 Krefeld (DE); Vössing, Michael, 44866 Bochum (DE); Kehrmann, Alexander, 46509 Xanten (DE)
(74) Vertreter: Renken, Joachim

(56) Entgegenhaltungen:
- EP-A- 1 314 706
- DE-U1- 29 915 326

## Beschreibung

Die Erfindung betrifft ein Verfahren zur Herstellung eines hydraulischen Bindemittels, welches Zement als Hauptbestandteil enthält, wobei dem Zement zur Chromatreduzierung ein eisen(II)sulfathaltiges Reduktionsmittel zugegeben wird.

Zement ist ein fein gemahlenes hydraulisches Bindemittel für Mörtel und Beton, das im Wesentlichen aus Verbindungen aus Calziumoxid mit Siliziumdioxid, Aluminiumoxid und Eisenoxid besteht, die durch Sintern oder Schmelzen entstanden sind. Die Hauptbestandteile des Zements werden aus kalk- und tonhaltigen Rohstoffen (Kalkstein, Kreide und Ton) oder bevorzugt aus Mergel gewonnen. Die Rohstoffe werden getrocknet, fein gemahlen und vermischt (Trockenverfahren) oder im nassen Zustand gemahlen und als Dickschlamm gemischt (Nassverfahren). Danach werden Rohmehl oder Dickschlamm in einem Schacht- oder Drehrohrofen bei Temperaturen von 1.400 bis 1.500 °C gebrannt. Hierbei entsteht durch Sintern der sogenannte Zementklinker. Dieser wird dann zum Zement fein vermahlen.

Der Chromgehalt von Zement liegt je nach verwendeter Rohstoffbasis üblicherweise zwischen 2 ppm und 100 ppm. Das im Zement enthaltene Chrom kann beim Mischen mit Wasser als Chrom(VI) in Lösung gehen und bei häufigem Kontakt die Haut sensibilisieren und allergische Reaktionen bis hin zu Ekzemen, die sogenannte Maurerkrätze, auslösen. Zum Schutz gegen Chromallergien kommt in Betracht, das Chrom(VI) zum Chrom(III) zu reduzieren und damit die Löslichkeit stark zu reduzieren.

Als Reduktionsmittel wird in der Zementindustrie hauptsächlich Eisen(II)sulfat, und zwar sowohl als Heptahydrat als auch als Monohydrat, eingesetzt. Hierüber finden sich in der Literatur verschiedene Abhandlungen, beispielsweise in "Locher, Friedrich Wilhelm; Zement: Grundlagen der Herstellung und Verwendung, Verlag Bau und Technik GmbH, Düsseldorf 2000". Auch in "Manns W.; Laskowski, Ch.: Eisen(II)sulfat als Zusatz zur Chromatreduzierung in BE-Z: Beton, H.2 1999" wird die Verwendung von trockenem pulverförmigem Eisen(II)sulfat zur Chromatreduzierung beschrieben.

EP 131 4 706 beschreibt ein Verfahren zur Herstellung eines Hydraulischen Bindemittels mit dem Hauptbestandteil Zement, dem eine Mischung aus feuchtem Grünsalz, und inertem Trägermaterial zugefügt ist.

Die DE 201 19 021 U1 beschreibt ein hydraulisches Bindemittel mit dem Hauptbestandteil Zement, dem zur Chromatreduzierung eine Mischung aus feuchtem Grünsalz und einem inerten Trägermaterial zugefügt wird, wobei die Mischung eine Körnung mit einem Siebrückstand, gemessen auf einem 0,2 mm Sieb von kleiner oder gleich 30 % aufweisen soll.

Eisen(II)sulfat-Heptahydrat hat gute Lösungseigenschaften, besitzt jedoch nur eine moderate Lagerstabilität. Folglich muss zur Erreichung der angestrebten Wirkung eine vergleichsweise hohe Dosierung vorgenommen werden.

Eisen(II)sulfat-Monohydrat ist im Vergleich zum Eisen(11)sulfat-Heptahydrat wesentlich stabiler und geht verzögert in Lösung. Dies hat zur Folge, dass Eisen(II)sulfat-Monohydrat zu Beginn beim Kontakt mit Wasser bei der Herstellung des hydraulischen Bindemittels unter Umständen kaum bzw. nur ein vermindertes Reduktionsvermögen für Chrom(VI)-Verbindungen bewirkt.

Ein grundsätzliches Problem bei der Zugabe von Eisen(II)sulfat-Komponenten zur Chromatreduzierung besteht in der Gefahr, dass es aufgrund der relativ großen Partikel der Eisen(II)sulfat-Komponenten im fertigen Zement zu einer lokalen Eisenanreicherung kommen kann mit der Folge von braunen Flecken aufgrund von Oxidationsvorgängen, den sogenannten "Stippen". Das Problem tritt insbesondere auf, wenn wenig oder kein Sand bei der Verarbeitung des Zements zugesetzt wird, wie beispielsweise bei Fliessestrich. Diese lokale Braunverfärbung des Zements bzw. eines unter Verwendung eines solchen Zements hergestellten Objekts wird als nachteilig empfunden.

Der Erfindung liegt, ausgehend vom Stand der Technik, die Aufgabe zugrunde, ein Verfahren zur Herstellung eines anwendungstechnisch verbesserten chromatarmen hydraulischen Bindemittels aufzuzeigen.

Die Lösung dieser Aufgabe besteht in einem Verfahren mit den Maßnahmen von Patentanspruch 1.

Kernpunkt der Erfindung bildet die Maßnahme, dass das eisen(II)sulfathaltige Reduktionsmittel zumindest zu 5 Gew.% Eisen(II)sulfat-Monohydrat (FeSO₄ x H₂O) enthält und zumindest ein Teil des Reduktionsmittels zusammen mit dem Zementklinker bei der Herstellung des Zements vermahlen wird. Vorzugsweise wird das gesamte Reduktionsmittel zusammen mit dem Zementklinker gemahlen.

Auf diese Weise erhält man eine Zerkleinerung und innige Vermischung des Reduktionsmittels mit dem Zementmehl. Die Feinheit des Reduktionsmittels wird prozesstechnisch auf das Zementmehl angepasst, was sich sowohl für die Verarbeitung des hydraulischen Bindemittels als auch das Reaktionsvermögen des Reduktionsmittels vorteilhaft auswirkt. Zusätzliche teils aufwändige Aufbereitungsmaßnahmen zur Einstellung auf die Körnung bzw. Körnungsband des Reduktionsmittels können entfallen. Durch die homogene Mischung des Reduktionsmittels mit dem Zementmehl wird eine gleichmäßige Verteilung des Reduktionsmittels im hydraulischen Bindemittel sichergestellt. Hierdurch können die lokalen Anreicherungen der Eisen(II)sulfat-Komponenten in ausreichendem Maße vermieden und die aufgrund der Oxidationsvorgänge der Eisenkomponenten sonst möglichen nachteiligen braunen Flecken im hydraulischen Bindemittel vermieden werden.

Grundsätzlich kann das Reduktionsmittel während des laufenden Mahlprozesses des Zementklinkers zugegeben werden. Verfahrensmäßig vorteilhaft ist, wenn Reduktionsmittel und Zementklinker zusammengeführt und anschließend in die Mühle überführt werden, wie dies Patentanspruch 2 vorsieht.

Als für die Praxis besonders vorteilhafter Eisen(II)sulfat-Monohydrat-Lieferant wird Filtersalz aus der Titandioxidproduktion angesehen. Demzufolge soll das Reduktionsmittel Eisen(II)sulfat-Monohydrat (FeSO₄ x H₂O) insbesondere in Form von Filtersalz aus der Titandioxidproduktion enthalten, wobei diesem Reduktionsmittel grundsätzlich weitere Eisen(II)sulfat-Komponenten oder zusätzliche Chromreduktionsmittel zugegeben sein können (Patentanspruch 3).

Die Herstellung und Charakterisierung von Filtersalz ist beispielsweise in der DE 103 32 530 beschrieben. Der Vorteil von Filtersalz besteht neben der geringen Menge an Kristallwasser und der deshalb verringerten Reaktivität mit dem Zement in dem zwischen den Kristalliten befindlichen Säuregehalt, welcher die Oxidationsgeschwindigkeit des Fe(II) zum Fe(III) deutlich reduziert. Diese Säurestabilisierung ist aufgrund der intensiven Durchmischung und Zerkleinerung bei der Zementmahlung und der hohen Temperaturen während der Zementmahlung besonders vorteilhaft.

Gemäß den Maßnahmen von Patentanspruch 4 kommt als Reduktionsmittel ausschließlich Eisen(II)sulfat-Monohydrat, insbesondere in Form von Filtersalz aus der Titandioxidproduktion zur Anwendung.

Demgegenüber sieht Patentanspruch 5 vor, dass das Reduktionsmittel als Mischung von Eisen(II)sulfat-Monohydrat (FeSO₄ x H₂O) insbesondere in Form von Filtersalz aus der Titandioxidproduktion und Eisen(II)sulfat-Heptahydrat (FeSO₄ x 7H₂O) insbesondere in Form von Grünsalz zugegeben wird.

Die beiden Komponenten Filtersalz und Grünsalz ergänzen sich im erfindungsgemäßen Sinne synergistisch. Die Chromatreduzierung im Zement wird über die Zeit gesehen am Anfang durch das Eisen(11)sulfat-Heptahydrat (Grünsalz) aufgrund dessen guter Löslichkeitseigenschaften. Die Langzeitstabilität des Chromatreduzierers wird demgegenüber durch das Eisen(II)sulfat-Monohydrat (Filtersalz) erzielt. Mithin stellt der Chromatreduzierer, bestehend aus einer Mischung von Eisen(II)sulfat-Heptahydrat und Eisen(II)sulfat-Monohydrat einerseits eine sofortige Chromatreduzierung bei der Verarbeitung des Zements und andererseits eine Lagerstabilität des Zements über einen langen Zeitraum sicher.

Selbstverständlich ist auch eine separate Zumischung der beiden Eisen(II)sulfat-Lieferanten, also des Eisen(II)sulfat-Monohydrats und des Eisen(II)-Heptahydtats möglich. Demzufolge ist nach Patentanspruch 6 vorgesehen, dass als weiteres Reduktionsmittel neben Eisen(II)sulfat-Monohydrat zusätzlich Eisen(II)sulfat-Heptahydrat zugegeben wird.

Da auch Zinnsulfat (SnSO₄) eine Chromatreduzierung im Zement bewirkt, kann nach Patentanspruch 7 Zinnsulfat zugegeben werden, und zwar als Mischung mit Eisen(II)sulfat-Monohydrat. Selbstverständlich ist auch eine separate Zudosierung des Zinnsulfats als weiteres Reduktionsmittel denkbar (Patentanspruch 8).

Je nach der verwendeten Rohstoffbasis für die Herstellung des Zements, der angestrebten Reduktionseigenschaft und der Qualität des hydraulischen Bindemittels kann das Reduktionsmittel Eisen(II)sulfat-Monohydrat (FeSO₄ x H₂O) insbesondere in Form von Filtersalz aus der Titandioxidproduktion und Eisen(II)sulfat-Heptahydrat (FeSO₄ x 7H₂O) insbesondere in Form von Grünsalz enthalten, wobei das Massenverhältnis zwischen 5:95 und 95:5 liegt (Patentanspruch 9).

Nach den Maßnahmen von Patentanspruch 10 ist vorgesehen, dass das Eisen(II)sulfat-Monohydrat Schwefelsäure enthält und zwar in einem Anteil von 5 Gew.-% bis 35 Gew.-%. Durch die Zugabe eines Säurungsmittels kann die Reaktionsfähigkeit des Eisen(II)sulfats und damit die Lagerungsbeständigkeit des Zements bzw. des hydraulischen Bindemittels verlängert werden.

Im Rahmen der Erfindung ist insbesondere daran gedacht, dass das Eisen(II)sulfat-Monohydrat durch Kristallisation von eisen(II)sulfathaltigen Salzen aus eisen(II)sulfathaltiger Schwefelsäure gewonnen wird, wie dies Patentanspruch 11 vorsieht. Bevorzugt erfolgt die Gewinnung aus einer mehr als 50%igen Schwefelsäure. Anschließend erfolgt die Abtrennung der eisen(II)sulfathaltigen Salze.

In der Praxis weist das Eisen(II)sulfat-Monohydrat einen Titangehalt von 5 Gew.-% bis 15 Gew.-% bezogen auf den Eisenanteil auf (Patentanspruch 12).

Da ein erfindungsindividualisierender Bestandteil der Zement im hydraulischen Bindemittel ist, richtet sich Patentanspruch 13 auf einen Zement enthaltenden Chromatreduzierer, wobei diese Mischung nach dem erfindungsgemäß vorgesehenen Verfahren hergestellt ist.

## Patentansprüche

1. Verfahren zur Herstellung eines hydraulischen Bindemittels, welches Zement als Hauptbestandteil enthält, wobei dem Zement zur Chromatreduzierung ein eisen(II)sulfathaltiges Reduktionsmittel zugegeben wird, **dadurch gekennzeichnet, dass** das Reduktionsmittel Eisen(II)sulfat-Monohydrat (FeSO₄ x H₂O) in einer Menge von mindestens 5 Gew.% enthält und zumindest ein Teil des Reduktionsmittels zusammen mit dem Zementklinker gemahlen wird.

2. Verfahren nach Anspruch 1, **dadurch gekennzeichnet, dass** das Reduktionsmittel vor dem Vermahlen des Zementklinkers zugegeben wird.

3. Verfahren nach Anspruch 1 oder 2, **dadurch gekennzeichnet, dass** das Reduktionsmittel Eisen(II)sulfat-Monohydrat (FeSO₄ x H₂O), insbesondere in Form von Filtersalz aus der Titandioxidproduktion, enthält.

4. Verfahren nach Anspruch 1 oder 2, **dadurch gekennzeichnet, dass** als Reduktionsmittel ausschließlich Eisen(II)sulfat-Monohydrat (FeSO₄ x H₂O), insbesondere in Form von Filtersalz aus der Titandioxidproduktion, zugegeben wird.

5. Verfahren nach einem der Ansprüche 1 bis 3, **dadurch gekennzeichnet, dass** das Reduktionsmittel als Mischung von Eisen(II)sulfat-Monohydrat (FeSO₄ x H₂O), insbesondere in Form von Filtersalz aus der Titandioxidproduktion, und Eisen(II)sulfat-Heptahydrat (FeSO₄ x 7 H₂O), insbesondere in Form von Grünsalz, zugegeben wird.

6. Verfahren nach einem der Ansprüche 1 bis 3, **dadurch gekennzeichnet, dass** als weiteres Reduktionsmittel neben Eisen(II)sulfat-Monohydrat (FeSO₄ x H₂O) zusätzlich Eilen(11)sulfat-Heptahydrat (FeSO₄ x 7 H₂O) zugegeben wird.

7. Verfahren nach wenigstens einem der Ansprüche 1 bis 3 oder 5 und 6, **dadurch gekennzeichnet, dass** als Reduktionsmittel eine Mischung aus einer Eisen(II)sulfat-Komponente und Zinnsulfat (SnSO₄) zugegeben wird.

8. Verfahren nach wenigstens einem der Ansprüche 1 bis 6, **dadurch gekennzeichnet, dass** als weiteres Reduktionsmittel zusätzlich Zinnsulfat (SnSO₄) zugegeben wird.

9. Verfahren nach wenigstens einem der Ansprüche 1 bis 3 oder 5 und 6, **dadurch gekennzeichnet, dass** das Reduktionsmittel Eisen(II)sulfat-Monohydrat (FeSO₄ x H₂O), insbesondere in Form von Filtersalz aus der Titandioxidproduktion, und Eisen(II)sulfat-Heptahydrat (FeSO₄ x 7 H₂O), insbesondere in Form von Grünsalz, enthält, wobei das Massenverhältnis zwischen 5:95 und 95:5 liegt.

10. Verfahren nach einem der Ansprüche 1 bis 9, **dadurch gekennzeichnet, dass** das Eisen(II)sulfat-Monohydrat (FeSO₄ x H₂O) 5 bis 35 Gew.-% Schwefelsäure enthält.

11. Verfahren nach einem der Ansprüche 1 bis 9, **dadurch gekennzeichnet, dass** das Eisen(II)sulat-Monohydrat (FeS04 x H2O) erhältlich ist durch Kristallisation von eisen(II)sulfathaltigen Salzen aus eisen(II)sulfathaltiger Schwefelsäure, bevorzugt eine mehr als 50%ige Schwefelsäure, und anschließende Abtrennung der eisen(II)sulfathaltigen Salze.

12. Verfahren nach einem der Ansprüche 1 bis 9, **dadurch gekennzeichnet, dass** das Eisen(II)sulfat-Monohydrat (FeS04 x H2O) einen Titangehalt von 5 bis 15 Gew.-%, bezogen auf Eisen, aufweist.

## Claims

1. Process for producing a hydraulic binder which contains cement as the main constituent, wherein an iron(II) sulphate-containing reducing agent is added to the cement for chromate reduction, **characterised in that** the reducing agent contains iron(II) sulphate monohydrate (FeSO₄ x H₂O) in a quantity of at least 5 wt.% and at least some of the reducing agent is ground together with the cement clinker.

2. Process according to claim 1, **characterised in that** the reducing agent is added before grinding the cement clinker.

3. Process according to claim 1 or 2, **characterised in that** the reducing agent contains iron(II) sulphate monohydrate (FeSO₄ x H₂O), in particular in the form of filter salt from titanium dioxide production.

4. Process according to claim 1 or 2, **characterised in that** only iron(II) sulphate monohydrate (FeSO₄ x H₂O), in particular in the form of filter salt from titanium dioxide production, is added as reducing agent.

5. Process according to one of claims 1 to 3, **characterised in that** the reducing agent is added as a mixture of iron(II) sulphate monohydrate (FeSO₄ x H₂O), in particular in the form of filter salt from titanium dioxide production, and iron(II) sulphate heptahydrate (FeSO₄ x 7H₂O), in particular in the form of green salt.

6. Process according to one of claims 1 to 3, **characterised in that** in addition to iron(II) sulphate monohydrate (FeSO₄ x H₂O), iron(II) sulphate heptahydrate (FeSO₄ x 7H₂O) is additionally added as a further reducing agent.

7. Process according to at least one of claims 1 to 3 or 5 and 6, **characterised in that** a mixture of an iron(II) sulphate component and tin sulphate (SnSO₄) is added as reducing agent.

8. Process according to at least one of claims 1 to 6, **characterised in that** tin sulphate (SnSO₄) is additionally added as a further reducing agent.

9. Process according to at least one of claims 1 to 3 or 5 and 6, **characterised in that** the reducing agent contains iron(II) sulphate monohydrate (FeSO₄ x H₂O), in particular in the form of filter salt from titanium dioxide production, and iron(II) sulphate heptahydrate (FeSO₄ x 7H₂O), in particular in the form of green salt, wherein the mass ratio lies between 5:95 and 95:5.

10. Process according to one of claims 1 to 9, **characterised in that** the iron(II) sulphate monohydrate (FeSO₄ x H₂O) contains 5 to 35 wt.% of sulphuric acid.

11. Process according to one of claims 1 to 9, **characterised in that** the iron(II) sulphate monohydrate (FeSO₄ x H₂O) can be obtained by crystallisation of iron(II) sulphate-containing salts from iron(II) sulphate-containing sulphuric acid, preferably a more than 50% strength sulphuric acid, and subsequent separation of the iron(II) sulphate-containing salts.

12. Process according to one of claims 1 to 9, **characterised in that** the iron(II) sulphate monohydrate (FeSO₄ x H₂O) has a titanium content of 5 to 15 wt.% relative to iron.

## Revendications

1. Procédé de fabrication d'un liant hydraulique, qui contient du ciment comme composant principal, dans lequel on ajoute au ciment, en vue de réduire le chromate, un agent réducteur contenant du sulfate de fer (II), **caractérisé en ce que** l'agent réducteur contient une quantité inférieure à 5% en masse de sulfate de fer (II) monohydraté (FeSO₄xH₂O), et au moins une partie de l'agent réducteur est moulue en même temps que le clinker de ciment.

2. Procédé selon la revendication 1, **caractérisé en ce que** l'agent réducteur est ajouté avant la mouture du clinker de ciment.

3. Procédé selon la revendication 1 ou 2, **caractérisé en ce que** l'agent réducteur contient du sulfate de fer (II) monohydraté (FeSO₄xH₂O), en particulier sous une forme d'un sel de filtration provenant de la production de dioxyde de titane.

4. Procédé selon la revendication 1 ou 2, **caractérisé en ce que**, comme agent réducteur, on ajoute exclusivement du sulfate de fer (II) monohydraté (FeSO₄xH₂O), en particulier sous la forme d'un sel de filtration provenant de la production de dioxyde de titane.

5. Procédé selon l'une des revendications 1 à 3, **caractérisé en ce que** l'agent réducteur est ajouté sous la forme d'un mélange de sulfate de fer (II) monohydraté (FeSO₄xH₂O), en particulier sous la forme d'un sel de filtration provenant de la production de dioxyde de titane, et de sulfate de fer (II) heptahydraté (FeSO₄x7H₂O), en particulier sous la forme de sulfate de fer cristallisé.

6. Procédé selon l'une des revendications 1 à 3, **caractérisé en ce que** l'on ajoute comme agent réducteur additionnel, en plus du sulfate de fer (II) monohydraté (FeSO₄xH₂O), du sulfate de fer (II) heptahydraté (FeSO₄x7H₂O).

7. Procédé selon l'une au moins des revendications 1 à 3, ou 5 et 6, **caractérisé en ce que** l'on ajoute comme agent réducteur un mélange de composants au sulfate de fer (II) et du sulfate d'étain (SnSO₄).

8. Procédé selon l'une au moins des revendications 1 à 6, **caractérisé en ce que** l'on ajoute en outre comme agent réducteur supplémentaire du sulfate d'étain (SnSO₄).

9. Procédé selon l'une au moins des revendications 1 à 3, ou 5 et 6, **caractérisé en ce que** l'agent réducteur contient du sulfate de fer (II) monohydraté (FeSP₄xH₂O), en particulier sous la forme d'un sel de filtration provenant de la production de dioxyde de titane, et du sulfate de fer (II) heptahydraté (FeSO₄x7H₂O), en particulier sous la forme de sulfate de fer cristallisé, le rapport en masse se situant entre 5:95 et 95:5.

10. Procédé selon l'une des revendications 1 à 9, **caractérisé en ce que** le sulfate de fer (II) monohydraté (FeSO₄xH₂O) contient 5 à 35% d'acide sulfurique.

11. Procédé selon l'une des revendications 1 à 9, **caractérisé en ce que** le sulfate de fer (II) monohydraté (FeSO₄xH₂O) peut être obtenu par cristallisation de sels contenant du sulfate de fer (II) hors d'acide sulfurique contenant du sulfate de fer (II), de préférence un acide sulfurique à plus de 50%, suivie d'une séparation du sel contenant le sulfate de fer (II).

12. Procédé selon l'une des revendications 1 à 9, **caractérisé en ce que** le sulfate de fer (II) monohydraté (FeSO₄xH₂O) présente une teneur en titane de 5 à 15% en poids, sur base du fer.
